# EUROPEAN PATENT SPECIFICATION

(11) **EP 1 776 420 B1**
(45) Date of publication and mention of the grant of the patent: **24.02.2010**
(21) Application number: 05748097.2
(22) Date of filing: 07.06.2005
(51) Int. Cl.: C08L 83/04, C08K 5/00, C08K 5/098, C08K 9/10

(54) **CURABLE ORGANOPOLYSILOXANE COMPOSITION**
HÄRTBARE ORGANOPOLYSILOXANZUSAMMENSETZUNG
COMPOSITION D'ORGANOPOLYSILOXANE DURCISSABLE

(30) Priority: 18.06.2004 JP 2004181741
(43) Date of publication of application: 25.04.2007
(73) Proprietor: Dow Corning Toray Co., Ltd., Tokyo 100-0005 (JP)
(72) Inventor: NAKATA, Toshiki, Dow Corning Toray Co., Ltd., Chiba, 2990108 (JP); ONISHI, Masayuki, Dow Corning Toray Co., Ltd., Chiba, 2990108 (JP); OZAKI, Kouichi, Dow Corning Toray Co., Ltd., Chiba, 2990108 (JP)
(74) Representative: Gillard, Richard Edward
(86) International application number: PCT/JP2005/010759
(87) International publication number: WO 2005/123839

(56) References cited:
- EP-A- 0 493 791
- EP-A- 0 586 151
- US-A- 4 742 103
- US-A- 5 204 384

## Description

### Technical Field

The present invention relates to a curable organopolysiloxane composition, in particular to a curable organopolysiloxane composition that allows obtaining of a cured body not subject to decrease in hardness with the lapse of time during storage of the composition, and forms a cured body exhibiting excellent adhesion to various substrates by heating.

### Background Art

Generally, hydrosilylation-curable organopolysiloxane compositions have problem that their adhesive property is poor. In order to solve the problem, it was proposed either to add epoxy compounds and organoaluminum compounds to their compositions (see Japanese Laid-Open Patent Application Publication (Kokai) (hereinafter referred to as "Kokai") Sho 60-101146), or to combine the compositions with organic silicon compounds having silicon-bonded unsaturated groups and alkoxy groups, and aluminum or zirconium compounds (see Kokai Sho 62-240361, corresponding to U.S. Patent No. 4,742,103). Another proposal consisted of combining the composition with a zirconium (IV) compound and a silicon compound selected from the group consisting of a bis (trialkoxysilyl) alkane, di-silane with silicon-bonded alkoxy groups, and a siloxane or alkoxysilane having epoxy groups (see Kokai Hei 4-222871). Further examples of organosiloxane compositions curable by hydrosilation in the presence of a hydrosilation catalyst and an organometallic compound may be found in EP 0586 151, US 5,204,384, EP 0 493 791 and US 4,742, 103.

A disadvantage of the aforementioned curable organopolysiloxane compositions consists in that, under the effect of a condensation reaction between the silicon-bonded hydrogen atoms and water or silanol groups in the presence of organometallic compounds that occurs with the lapse of time during storage of the composition, or under the effect of other reactions, the cured products formed from the aforementioned composition loose their hardness below an allowable limit.

On the other hand, it was known that a condensation-reaction catalyst for the condensation-curable organopolysiloxane compositions could be made in the form of microcapsules consisting of an organometallic compound encapsulated in an organic resin (see Kokai Sho 59-49260, corresponding to U.S. Patent No. 4,461,854, and Kokai Hei 4-255758). It was not known, however, that, if such a condensation-reaction catalyst is added to a hydrosilylation-curable organopolysiloxane composition, it would be possible to restrict the loss of hardness in cured bodies over the time.

It is an object of the present invention to provide a curable organopolysiloxane composition that allows obtaining of a cured body not subject to decrease in hardness with the lapse of time during storage of the composition, and forms a cured body exhibiting excellent adhesion to various substrates by heating.

### Disclosure of Invention

The present invention provides a curable organopolysiloxane composition comprising:
(A) 100 parts by weight of organopolysiloxane, which is expressed by the following average unit formula: RₐSiO_{(4-a)/2} (wherein, R is a substituted or unsubstituted univalent hydrocarbon group, and a is a number between 1.0 and 2.3) and has an average of at least 1.5 alkenyl groups per molecule;
(B) an organopolysiloxane that has an average of at least 1.5 silicon-bonded hydrogen atoms per molecule in a quantity that provides from 0.05 to 20 moles of silicon-bonded hydrogen atoms in the component per 1 mole of alkenyl groups in the component (A);
(C) a hydrosilylation-reaction catalyst in a quantity sufficient to cause a cross-linking process in the composition under the effect of a hydrosilylation reaction; and
(D) 0.001 to 50 parts by weight of microscopic particles of thermoplastic resin, said particles comprising a thermoplastic resin and at least one type of an organometallic compound selected from the group consisting of organotitanium compound, organozirconium compound, organoaluminum compound, and organotin compound, said organometallic compound being either admixed or encapsulated with said thermoplastic resin to form the microscopic particles.

### Effects of Invention

The present invention is characterized by providing a curable organopolysiloxane composition that allows obtaining of a cured body not subject to decrease in hardness with the lapse of time during storage of the compsition, and forms a cured body exhibiting excellent adhesion to various substrates by heating.

### Detailed Description of the Invention

A curable organopolysiloxane composition of the present invention will now be considered in more detail.

Component (A) is one of the main components of the composition of the present invention. It is expressed by the following average unit formula: RₐSiO_{(4-a)/2} and has an average of at least 1.5 alkenyl groups per molecule. In this formula, R designates a substituted or unsubstituted univalent hydrocarbon group, such as a methyl group, ethyl group, propyl group, butyl group, pentyl group, hexyl group, or a similar alkyl group; a vinyl group, allyl group, butenyl group, pentenyl group, hexenyl group, heptenyl group, or a similar alkenyl group; a phenyl group, tolyl group, xylyl group, or a similar aryl group; a benzyl group, phenethyl group, or a similar aralkyl group; a 3-chloropropyl group, 3,3,3-trifluoropropyl group, or a similar halogenated alkyl group. In the molecule, at least 1.5 of R should comprise alkenyl groups. Most preferable of alkenyl groups of component (A) are vinyl and hexenyl groups. In component (A), preferable silicon-bonded groups other than alkenyl are methyl and phenyl groups. And in this formula, a subscript a is a number between 1.0 and 2.3. Component (A) may have a linear, branched, net-like, or dendrite molecular structure. And it may comprise a mixture of two or more compounds with different molecular structures. It is recommended that a viscosity of the component at 25°C may be in a range of 50 to 1,000,000 mPa • s, preferably a range of 100 to 500,000 mPa • s.

The following are specific examples of component (A): a copolymer of a methylvinylsiloxane and a dimethylsiloxane capped at both molecular terminals with trimethylsiloxy groups, a methylvinylpolysiloxane capped at both molecular terminals with trimethylsiloxy groups, a copolymer of a methylphenylsiloxane and a methylvinylsiloxane capped at both molecular terminals with trimethylsiloxy groups, a copolymer of a methylphenylsiloxane, methylvinylsiloxane, and dimethylsiloxane having both molecular terminals capped with trimethylsiloxy groups, a dimethylpolysiloxane capped at both molecular terminals with dimethylvinylsiloxy groups, a methylvinylpolysiloxane capped at both molecular terminals with dimethylvinylsiloxy groups, a methylphenylpolysiloxane capped at both molecular terminals with dimethylvinylsiloxy groups, a copolymer of a methylvinylsiloxane and a dimethylsiloxane capped at both molecular terminals with dimethylvinylsiloxy groups, a copolymer of a methylphenylsiloxane and a methylvinylsiloxane capped at both molecular terminals with dimethylvinylsiloxy groups, a copolymer of a diphenylsiloxane and a methylvinylsiloxane capped at both molecular terminals with dimethylvinylsiloxy groups, a methylvinylpolysiloxane capped at one molecular terminal with a trimethylsiloxy group and at another terminal with a dimethylvinylsiloxy group, a copolymer of a methylvinylsiloxane and a dimethylsiloxane capped at one molecular with trimethylsiloxy group and at another terminal with a dimethylvinylsiloxy group, an organopolysiloxane composed of R₃SiO_{1/2} units and SiO_{4/2} units, an organopolysiloxane composed of RSiO_{3/2} units, an organopolysiloxane composed of R₂SiO_{2/2} units and RSiO_{3/2} units, an organopolysiloxane composed of R₂SiO_{2/2} units, RSiO_{3/2} units, and SiO_{4/2} units, or mixtures of two or more of the aforementioned organopolysiloxanes. In the above examples, R designates substituted or unsubstituted univalent hydrocarbon groups and may be the same as defined above.

Furthermore, the organopolysiloxane of component (A) may be prepared as a mixture of an organopolysiloxane having two or more aforementioned alkenyl groups per molecule and an organopolysiloxane having less than two aforementioned alkenyl groups per molecule. In this case, an obtained organopolysiloxane should contain an average of at least 1.5 alkenyl groups per molecule. The aforementioned organopolysiloxane having less than two alkenyl groups per molecule may be represented by a dimethylpolysiloxane capped at one molecular terminal with a dimethylvinylsiloxy group and at the other terminal with a trimethylsiloxy group, a methylphenylpolysiloxane having one molecular terminal capped with a dimethylvinylsiloxy group and the other terminal with a trimethylsiloxy group, a copolymer of a methylvinylsiloxane and a dimethylsiloxane capped at both molecular terminals with trimethylsiloxy groups and having one vinyl group in a side molecular chain, a dimethylpolysiloxane capped at both molecular terminals with trimethylsiloxy groups, and a methylphenylpolysiloxane capped at both molecular terminals with trimethylsiloxy groups.

Component (B), which is a cross-linking agent for component (A), comprises an organopolysiloxane having an average of at least 1.5 silicon-bonded hydrogen atoms per molecule. More specifically, component (B) can be represented by an organopolysiloxane having an average of at least 2 silicon-bonded hydrogen groups per molecule. There are no special restrictions with regard to bonding positions of the silicon-bonded hydrogen atoms and they can be bonded, e.g., to molecular terminals, to side molecular chains, or to both molecular terminals and side molecular chains at the same time. The aforementioned silicon-bonded groups used in component (B) can be exemplified by a substituted or unsubstituted univalent hydrocarbon group such as a methyl group, ethyl group, propyl group, butyl group, pentyl group, hexyl group, or a similar alkyl group; a phenyl group, tolyl group, xylyl group, or a similar aryl group; a benzyl group, phenethyl group, or a similar aralkyl group; a 3-chloropropyl group, 3,3,3-trifluoropropyl group, or a similar halogenated alkyl group. Other groups suitable for the same purpose are a trimethoxysilylethyl group, methyldimethoxysilyl ethyl group, triethoxysilylethyl group, trimethoxysilylpropyl group or similar alkoxysilylalkyl group, a methoxy group, ethoxy group, propoxy group, or a similar alkoxy group; and a glycidoxypropyl group, glycidoxybutyl group, or similar glycidoxyalkyl group. (B) component may have a linear, branched, net-like, or dendrite molecular structure. And it may comprise a mixture of two or more compounds with different molecular structures. It is recommended that a viscosity of component (B) at 25 °C may be in a range of 1 to 500,000 mPa • s, preferably a range of 1 to 1,000 mPa • s.

The following are specific examples of compounds suitable for use as component (B): a methylhydrogenpolysiloxane capped at both molecular terminals with trimethylsiloxy groups, a copolymer of a methylhydrogensiloxane and a dimethylsiloxane capped at both molecular terminals with trimethylsiloxy groups, a copolymer of a methylphenylsiloxane and a methylhydrogensiloxane capped at both molecular terminals with trimethylsiloxy groups; a copolymer of a methylphenylsiloxane, methylhydrogensiloxane, and dimethylsiloxane capped at both molecular terminals with trimethylsiloxy groups, a dimethylpolysiloxane capped at both molecular terminals with dimethylhydrogensiloxy groups, a methylhydrogenpolysiloxane capped at both molecular terminals with dimethylhydrogensiloxy groups, a copolymer of a methylhydrogensiloxane and a dimethylsiloxane capped at both molecular terminals with dimethylhydrogensiloxy groups, a copolymer of a methylphenylsiloxane and a dimethylsiloxane capped at both molecular terminals with dimethylhydrogensiloxy groups, a copolymer of a methylphenylsiloxane, methylhydrogensiloxane, and a dimethylsiloxane having both molecular terminals capped with dimethylhydrogensiloxy groups, an organopolysiloxane composed of R'₃SiO_{1/2} units and SiO_{4/2} units, an organopolysiloxane composed of R'SiO_{3/2} units, an organopolysiloxane composed of R'₂SiO_{2/2} units and R'SiO_{3/2} units, and organopolysiloxane composed of R'₂SiO_{2/2} units, R'SiO_{3/2} units, and SiO_{4/2} units, a copolymer of a methylhydrogensiloxane and a methyl(trimethoxysilylethyl)siloxane capped at both molecular terminals with trimethylsiloxy groups, a copolymer of a methylhydrogensiloxane, a methyl(trimethoxysilylethyl)siloxane, and a methyl(3-glycidoxypropyl)siloxane capped at both molecular terminals with trimethylsiloxy groups, a copolymer of a dimethylsiloxane, a methylhydorogensiloxane, and a methyl(trimethoxysilylethyl)siloxane capped at both molecular terminals with trimethylsiloxy groups, a copolymer of a dimethylsiloxane, a methylhydrogensiloxane, a methyl(trimethoxysilylethyl)siloxane, and a methyl(3-glycidoxypropyl)siloxane capped at both molecular terminals with trimethylsiloxy groups, a copolymer of a methylhydrogensiloxane and a methyl(triethoxysilylethyl)siloxane capped at both molecular terminals with trimethylsiloxy groups, a copolymer of a methylhydrogensiloxane, a methyl(triethoxysilylethyl)siloxane, and a methyl(3-glycidoxypropyl)siloxane capped at both molecular terminals with trimethylsiloxy groups, a copolymer of a dimethylsiloxane, a methylhydrogensiloxane, and a methyl(triethoxysilylethyl)siloxane capped at both molecular terminals with trimethylsiloxy groups, a copolymer of a dimethylsiloxane, a methylhydrogensiloxane, a methyl(triethoxysilylethyl)siloxane, and a methyl(3-glycidoxypropyl)siloxane capped at both molecular terminals with trimethylsiloxy groups. The aforementioned organopolysiloxanes can be used in a mixture of 2 or more. In the above formulae, R may designate hydrogen atoms and substituted or unsubstituted univalent hydrocarbon groups, except for alkenyl groups. Such univalent hydrocarbon groups can be represented by abovementioned alkyl groups, aryl groups, aralkyl groups, or halogenated alkyl groups. From the point of view of improved mechanical properties and elongation characteristics of a cured body, it is recommended to combined the organopolysiloxane capped at both molecular terminals with silicon-bonded hydrogen atoms and the organopolysiloxane having three or more silicon-bonded hydrogen atoms per molecule.

It is recommended to add component (B) in such a quantity that provides 0.05 to 20 moles, preferably 0.1 to 20 moles, and even more preferably 0.1 to 10 moles of silicon-bonded hydrogen atoms in the component per 1 mole of alkenyl groups in component (A). This is because with the amount smaller than the lower recommended limit, the composition will not be sufficiently cured. If, on the other hand, component (B) is used in an amount exceeding the upper recommended limit, curing of the composition will be accompanied by foaming, and the obtained cured body will have a reduced mechanical strength.

Component (C) is a catalyst that promotes cross-linking of components (A) and (B) under the effect of a hydrosilylation reaction. Component (C) can be represented by a platinum black, platinum-carrying silica powder, platinum-carrying carbon powder, chloroplatinic acid, an alcohol solution of chloroplatinic acid, a platinum-olefin complex, platinum-alkenylsiloxane complex, or a similar hydrosilylation-reaction catalyst. Furthermore, the aforementioned hydrosilylation-reaction catalyst may be encapsulated into microcapsules of thermoplastic resin. There are no special restrictions with regard to the thermoplastic organic resin in component (C), but it may be exemplified, e.g., by a methylmethacrylate resin, polycarbonate resin, polystyrene resin, or a silicone resin. It is recommended that the softening point of these thermoplastic organic resins be within the range of 40 to 200 °C, preferably 40 to 150 °C, and even more preferably 40 to 100°C. If the softening point is below the lower recommended limit, the curable organopolysiloxane composition should be prepared and stored at low temperatures. If, on the other hand, the softening point exceeds the upper recommended limit, it would be difficult to cure the composition at relatively low temperatures. A method suitable for encapsulation of the aforementioned hydrosilation-reaction catalyst in a thermoplastic resin is disclosed, e.g., in Kokai Sho 64-45468, corresponding to U.S. Patent No. 4,766,176.

Component (C) should be used in a catalytic quantity sufficient for promoting cross-linking of the composition under the effect of a hydrosilylation reaction. In terms of weight units, component (C) should be added in such an amount that content of a catalytic metal be within the range of 0.1 to 10,000 ppm per total weight of components (A) and (B). If component (C) is used in an amount smaller than the lower recommended limit, it would be difficult to provide sufficient curing of the composition. If, on the other hand, it is added in an amount exceeding the upper recommended limit, it would be impossible to accelerate the curing.

In the composition of the present invention, component (D) is used for imparting adhesiveness to the composition. Component (D) may comprise a thermoplastic resin and at least one type of an organometallic compound selected from the group consisting of an organotitanium compound, organozirconium compound, organoaluminum compound, and organotin compound. The aforementioned organometallic compound is encapsulated into a microcapsule of the aforementioned thermoplastic resin. Microcapsules of component (D) should have an average diameter of 0.01 to 500 µm, preferably 0.01 to 200 µm, and even more preferably 0.01 to 100 µm. If the diameter of the microcapsules is smaller than the lower recommended limit, the obtained thermoplastic resin will acquire a tendency to aggregate, and it would be difficult to disperse the microparticles in the curable organopolysiloxane composition. If, on the other hand, the diameter of the microcapsules is greater than the upper recommended limit, it would be difficult to disperse the organometallic compound in the aforementioned thermoplastic resin during heating of the composition that contains the obtained thermoplastic resin particles. It would also be difficult to provide the composition with adequate adhesion.

Organometallic compounds contained in component (D) comprise at least one type of the compound selected from the group consisting of organotitanium compound, organozirconium compound, organoaluminum compound, and organotin compound. The organotitanium compound can be represented, e.g., by a tetrabutyltitanate, tetraisopropyltitanate, or a similar organic titanic acid ester, diisopropoxy-bis (acetylacetate) titanium, diisopropoxy-bis (ethylacetoacetate) titanium, or similar organic titanium chelate compound. The organozirconium compound can be represented, e.g., by zirconium tetrapropylate, zirconium tetrabutylate, or similar organic zirconium ester, zirconium diacetate, zirconium tetra (acetylacetonate), tributoxy zirconium acetylacetonate, dibutoxy zirconium- bis (acetylacetonate), tributoxy zirconium acetoacetate, dibutoxy zirconium acetylacetonate (ethylacetoacetate), or similar organic zirconium chelate compound. The organoaluminum compound can be represented, e.g., by aluminum triethylate, aluminum triisopropylate, aluminum tri(sec-butylate), mono (sec-butoxy) aluminum diisopropylate, or similar organic aluminum ester, diisopropoxyaluminum (ethylacetoacetate), aluminum tris (ethylacetoacetate), aluminum bis (ethylacetoacetate) monoacetylacetonate, aluminum tris (acetylacetonate), or similar organic aluminum chelate compound. The organotin compound may comprise a dibutyltindioctoate, dibutyltindilaurate, butyltin-2-ethylhexoate, or similar organotin compound; as well as a tin naphthenate, tin oleate, tin butylate, or a similar organic tin carboxylate. Component (D) may contain the aforementioned organometallic compounds individually or in a mixture of two or more. Especially, it is recommended that the organometallic compound in component (D) may be a metal chelate compound.

There are no special restrictions with regard to the content of the organometallic compound in component (D), but it may be recommended that this content should be within the range of 1 to 99.9 wt.%, preferably 2 to 90 wt.%, and even more preferably 5 to 90 wt.%. If the content of organometallic compound in component (D) is below the lower recommended limit, in order to provide an adequate adhesion, it would be required to use an increased amount of the thermoplastic resin microparticle. If, on the other hand, the content of the organometallic compound in component (D) exceeds the upper recommended limit, it would be difficult to uniformly encapsulate or distribute the organometallic compound in the thermoplastic resin.

The thermoplastic organic resin of component (D) may be exemplified, e.g., by a methylmethacrylate resin, polycarbonate resin, polystyrene resin, or a silicone resin. It is recommended that the softening point of these thermoplastic resins be within the range of 40 to 200°C, preferably 40 to 150 °C, and even more preferably 40 to 100°C. If the softening point is below the lower recommended limit, the curable organopolysiloxane composition should be prepared and stored at low temperatures. If, on the other hand, the softening point exceeds the upper recommended limit, it would be difficult to provide good adhesion of the composition to various substrates at relatively low temperatures.

There are no special restrictions with regard to a method suitable for the preparation of component (D). It can be prepared, e.g., by a known chemical process, such as surface polymerizatioin or *in-situ* polymerization; by a physical process, such as coacervation or drying in a liquid; or by a physical-mechanical process, such as spray drying. Among these processes, most preferable is spray drying as this process allows selection of thermoplastic resins in a wide range and provides relatively simple preparation of thermoplastic resin particles.

Component (D) should be added to the composition in an amount of 0.001 to 50 parts by weight, preferably 0.01 to 50 parts by weight, and even more preferably 0.01 to 20 parts by weight, and further preferably 0.1 to 20 parts by weight per 100 parts by weight of component (A). If it is used in an amount smaller than the lower recommended limit, the obtained composition will have low adhesion. If, on the other hand, it is used in an amount exceeding the upper recommended limit, this will reduce mechanical strength in cured products obtained from the composition of the invention.

The composition of the present invention should contain at least components (A) thorugh (D) as indispensable constituents, but also may arbitrarily contain a silicon compound (E) that contains a silicon-bonded alkoxy group and /or epoxy group, but does not contain silicon-bonded hydrogen atoms. The aforementioned alkoxy group can be represented by a methoxy group, ethoxy group, propoxy group, butoxy group, and a methoxyethoxy group. Most preferable of the above is the methoxy group. The aforementioned epoxy group is exemplified by 3-glycidoxypropyl group, 4-glycidoxybutyl group, or a similar glycidoxyalkyl group; 2-(3,4-epoxycyclohexyl) ethyl group, 3-(3,4-epoxycyclohexyl) propyl group, or a similar epoxycyclohexylalkyl group; an epoxy-containing univalent organic group such as 4-oxylanylbutyl group, 8-oxylanylactyl group, or a similar oxylanylalkyl group. If component (E) contains only silicon-bonded alkoxy group and /or epoxy group, it can be exemplified by an alkylsilicate, and epoxy-containing alkoxysilane. There are no special restrictions with regard to component (E), if the component (E) has silicon-bonded organic groups other than the aforementioned silicon-bonded alkoxy group and epoxy group, the groups can be exemplified by a substituted or unsubstituted univalent hydrocarbon group such as a methyl group, ethyl group, propyl group, butyl group, pentyl group, hexyl group, or a similar alkyl group; a viniy group, allyl group, butenyl group, pentenyl group, hexenyl group, heptenyl group, or similar alkenyl group; a phenyl group, tolyl group, xylyl group, or a similar aryl group; a benzyl group, phenethyl group, or a similar aralkyl group; a 3-chloropropyl group, 3,3,3-trifluoropropyl group, or a similar halogenated alkyl group. Futhermore the other goup can be exemplified by 3-methacryloxypropyl group or a similar acryloxyalkyl group. Most preferable of the above is the alkenyl group.

Such organic silicon compounds contained in component (E) can be represented by an organosilane compound, organosiloxane oligomer, and alkylsilicate. The aforementioned organosiloxane oligomer or alkylsilicate may have a linear or partially-branched linear, branched, cyclic, or a net-like structure. The linear, branched, and net-like structure are preferable. The aforementioned organic silicon compounds can be exemplified as follows: a 3-glycidoxypropyltrimethoxysilane, 2-(3,4-epoxycyclohexyl)-ethyltrimethoxysilane, 3-methacryloxypropyltrimethoxysilane or a similar silane compound; a siloxane compound that contain per molecule at least one of each of the following: a silicon-bonded alkenyl group and a silicone bonded alkoxy group; a silane compound that contains at least one silicon-bonded alkoxy group, or a mixture of this compound with a siloxane compound that contains per molecule at least one of each of the following: a silicon-bonded hydroxy group and a silicon-bonded alkenyl group; a siloxane compound of the following formula: 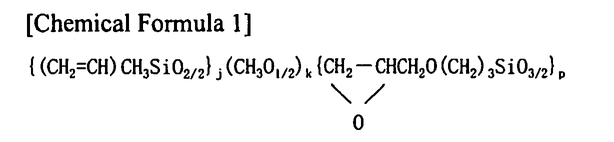 (wherein, j, k, and p are positive numbers)
a siloxane compound of the following formula: 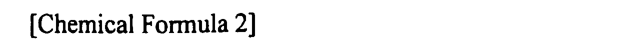 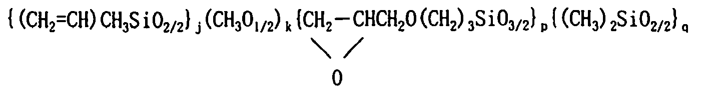 (wherein, j, k, p, and q are positive numbers),
methylpolysilicate, ethylpolysilicate, and epoxy-containing ethylpolysilicate. It is recommended that these adhesion-assisting agents be in the form of a low-viscosity liquid. Although there are no special restrictions with regard to the value of the viscosity, it is recommended to have the viscosity within the range of 1 to 500 mPa·s.

There are no special restrictions with regard to the amount in which component (E) should be use, but it recommended to add this component in an amount of 0.01 to 30 parts by weight, preferably 0.1 to 30 parts by weight, and even more preferably 0.1 to 20 parts by weight per 100 parts by weight of component (A). If component (E) is used in an amount smaller than the lower recommended limit, it would be impossible to improve adhesiveness of the composition. If, on the other hand, component (E) is used in an amount exceeding the upper recommended limit, a cured body obtained from the composition will have low mechanical strength.

For adjusting curing reaction conditions, the composition of the invention may be arbitrarily combined with a reaction inhibitor (F). Component (F) can be exemplified by the following compounds: 1-ethnyl-1-cyclohexanol, 2-methyl-3-butyn-2-ol, 2-phenyl-3-butyn-2-ol, 2-ethnyl-isopropanol, 2-ethnylbutan-2-ol, 3,5-dimethyl-1-hexyn-3-ol, or similar acetylene-type alcohols; trimethyl (3,5-dimethyl-1-hexyn-3-oxy)silane, methylvinyl bis (3-methyl-1-butyn-3-oxy) silane, ((1,1-dimethyl-2-propynyl)oxy)trimethylsilane, or similar silylated acetylene-type alcohols; diallyl maleate, dimethyl maleate, diethyl fumarate, diaryl fumarate, bis (methoxyisopropyl) maleate, or similar unsaturated carboxylic acid esters; 2-isobutyl-1-buten-3-yne, 3,5-dimethyl-3-hexen-1-yne, 3-methyl-3-penten-1-yne, 3-methyl-3-hexen-1-yne, 1-ethnylcyclohexene, 3-ethyl-3-buten-1-yne, 3-phenyl-3-buten-1-yne, or similar conjugated en-ynes; and 1,3,5,7-tetramethyl-1,3,5,7-tetravinylcyclotetrasiloxane, or similar vinylcyclotetrasiloxanes. Although there are no special restrictions with regard to the amount of component (F) in the composition, it can be added preferably in an amount of 0.001 to 5 parts by weight per 100 parts by weight of component (A).

For improving a mechanical strength of cure a body, the composition of the invention may be arbitrarily combined with inorganic fillers. The fillers can be exemplified by a fumed silica, precipitated silica, titanium oxide, carbon black, alumina, quartz, and said filler surface-treated by organic silicon compounds, such as, organoalkoxysilane, organochlorosilane, organosilazane. There are no special restrictions with regard to the amount of the inorganic fillers in the composition, it can be added preferably in an amount of less than 100 parts by weight, and even more preferably in an amount of 0.1 to 20 parts by weight per 100 parts by weight of component (A).

Curing of the composition of the invention can be accelerated by heating. Furthermore, for improving adhesion of the composition to various substrates, it is recommended to heat the composition above the softening point of the thermoplastic resin contained in component (D). The composition can be cured into an elastomer, and most preferably, into a gel and rubber form.

### Examples

The curable organopolysiloxane composition of the present invention will now be described in more detail with reference to practical examples. In these examples, viscosity values were measured at 25 °C. Adhesive strength of the curable organopolysiloxane composition was measured in accordance with Japanese Industrial Standard (JIS K 6850): Testing Method of Strength Properties of Adhesives in Shear by Tension Loading.

### [Reference Example 1]

16 g of 1,3-divinyltetramethyldisiloxane and 6 g of an aqueous solution of a chloroplatinic acid (content of metallic platinum: 33 wt.%) were dissolved in 35 g of an isopropyl alcohol. The solution was combined with 10 g of sodium bicarbonate, and while the mixture was stirred in a suspended state, a reaction was carried out for 30 min. with heating at 70 to 80 °C. Following this, isopropyl alcohol and water were removed by distillation in vacuum of 50 mmHg at 45 °C, and the solids were separated by filtering. The resulting product comprised a 1, 3-divinyltetramethyldisiloxane solution of a platinum-complex catalyst coordinated with 1,3-divinyltetramethyldisiloxane that contained 8.5 wt.% of platinum.

### [Reference Example 2]

332 g of phenyltrichlorosilane, 53 g of dimethyldichlorosilane, and 110 g of diphenyldichlorosilane were diluted with 150 g of toluene. The obtained solution was subjected to hydrolysis by being added dropwise to a solution composed of 430 g of toluene, 142 g of methylethylketone, and 114 g of water. The obtained reaction mixture was washed with water. The hydrogen chloride was removed, and the organic layer was separated. The solution was again heated, and the methylethylketone was separated. Following this, the product was combined with 0.2 g of potassium hydroxide and heated. Water formed in this process was removed by distillation, and then the solution was neutralized with acetic acid and repeatedly washed with water. The solvent was dried out, and a thermoplastic silicone resin was obtained. This thermoplastics silicone resin had a glass transition point of 65°C and a softening point of 85 °C.

### [Reference Example 3]

900 g of the thermoplastic silicone resin prepared in Reference Example 2, toluene in an amount of 500 g, and 4600 g of dichloromethane were loaded into a glass container equipped with a stirrer and were uniformly mixed. The mixture was then combined with 44.4 g of the 1,3-divinyltetramethyldisiloxane solution of the platinum-complex catalyst prepared in Reference Example 1 and coordinated with the 3-divinyltetramethyldisiloxane. The obtained liquid was mixed and pulverized in a continuous mode into a heated nitrogenous flow in a spray drier cylinder (the product of Ashizawa Nitro Atomizer Co.) equipped with a two-flow nozzle. At the entrance into the spray drier, the temperature of the nitrogenous flow was 95 °C, and at the exit from the spray drier the nitrogenous flow temperature was 45 °C. The hot gas flow had a velocity of 1.3 m³/min. Following 1 hour run, 450 g of thermoplastic silicone resin microparticles that contained the hydrosilylation-reaction catalyst were collected on a bag filter. The microparticles had an average size of 1.1 µm and contained 0.4 wt.% of platinum.

### [Reference Example 4]

50 g of the thermoplastic silicone resin prepared in Reference Example 2, toluene in an amount of 50 g, and 500 g of dichloromethane were loaded into a glass container equipped with a stirrer and were uniformly mixed. The mixture was then combined with 50.0 g of a zirconium tetra(acetylacetonate). The obtained slurry was mixed and pulverized in a continuous mode into a heated nitrogenous flow in spray drier cylinder (the product of Ashizawa Nitro Atomizer Co.) equipped with a two-flow nozzle. At the entrance into the spray drier, the temperature of the nitrogenous flow was 95 °C and at the exit from the spray drier the nitrogenous flow temperature was 45 °C. The hot gas flow had a velocity of 1.3 m³/min. Following 10 min. run, 70 g of a thermoplastic silicone resin microparticles that contained the zirconium tetra(acetylacetonate) were collected on a bag filter. The microparticles had an average size of 2 µm, and contained 50 wt.% of zirconium tetra(acetylacetonate).

### [Reference Example 5]

Thermoplastic silicone resin microparticles that contained zirconium tetra(acetylacetonate) were prepared by the same method as described in Reference Example 4, with the exception that zirconium tetra(acetylacetonate) was used in an amount of 10 g, instead of 50 g. At the entrance into the spray drier, the temperature of the nitrogenous flow was 95°C, and at the exit from the spray drier, the nitrogenous flow temperature was 45 °C. The hot gas flow had a velocity of 1.3 m³/min. Following 5 min. run, 40 g of a thermoplastic silicone resin microparticles that contained the zirconium tetra(acetylacetonate) were collected on a bag filter. The microparticles had an average size of 2 µm and contained 10 wt.% of zirconium tetra(acetylacetonate).

### [Practical Example 1]

A uniform mixture was prepared from 47 parts by weight of a dimethylpolysiloxane having a viscosity of about 2,000 mPa·s and capped at both molecular terminals with dimethylvinylsiloxy groups, 49 parts by weight of dimethylpolysiloxane having a viscosity of about 10,000 mPa·s and capped at both molecular terminals with dimethylvinylsiloxy groups, and 16 parts by weight of a fine silica powder subjected to hydrophobic surface treatment with hexamethyldisilazane to a specific surface area of 200 m²/g. A curable organopolysiloxane composition was then prepared by uniformly mixing 2.3 parts by weight of an organopolysiloxane represented by the following average molecular formula: 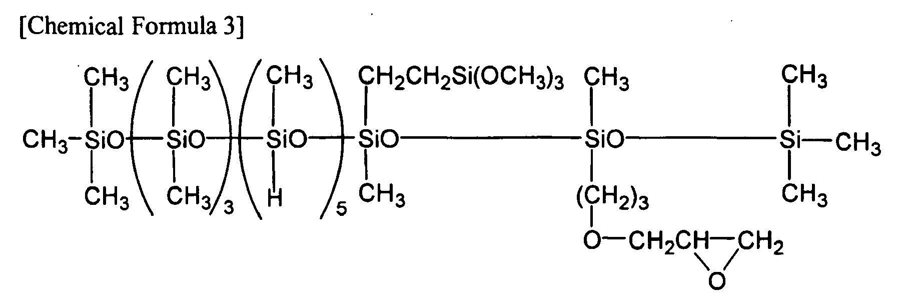 (silicon-bonded hydrogen atoms of this component comprised 1.5 moles per 1 mole of total vinyl groups in the aforementioned dimethylpolysiloxane), 0.37 parts by weight of thermoplastic silicone resin microparticles with the hydrosilylation-reaction catalyst prepared in Reference Example 2, as well as 0.88 parts by weight of thermoplastic silicone resin microparticles with the zirconium tetra(acetylacetonate) prepared in Reference Example 4, and 0.018 parts by weight of 2-phenyl-3-butyn-2-ol.

Directly after the preparation, the aforementioned composition was sandwiched between two testpieces made from a polyphenylene sulfide so that 1 mm-thick assembly was formed. This composition was then cured by heating for 30 min. in an oven at 110°C, and a single specimen was formed by laminating two testpieces through a layer of the silicone rubber. The specimen was installed in a tensile tester and subjected to an adhesion strength test. The rupture surface was observed, and the percentage of the surface area with cohesion breakdown over the silicone rubber was measured. And this composition directly after the preparation was cured by heating for 30 min. in an oven at 110°C, and hardness of the obtained rubber-like cured body was measured by Type E durometer prescribed in Japanese Industrial Standard (JIS K 6253). Furthermore, the composition was retained for 4 days at a temperature of 25°C after its preparation, and then cured under the same conditions as above. Hardness of the obtained rubber-like cured body was measured. The results of measurements are shown in Table 1.

### [Practical Example 2]

A curable organopolysiloxne composition was prepared by the same method as in Practical Example 1, with the exception that 2.2 parts by weight of thermoplastic silicone resin microparticles that contained the zirconium tetra(acetylacetonate) obtained in Reference Example 5 were added instead of the thermoplastic silicone resin microparticles that contained zirconium tetra(acetylacetonate) obtained in Reference Example 4.
Directly after the preparation, the composition was tested with regard to the adhesive strength, percentage of the cohesion breakdown, and hardness of the obtained rubber-like cured body. And the composition was retained for 4 days at a temperature of 25 °C after its preparation, and then cured under the same conditions as above. Hardness of the obtained rubber-like cured body was measured. The results of measurements are shown in Table 1.

### [Comparative Example 1]

A curable organopolysiloxane composition was prepared by the same method as in Practical Example 1, with the exception that the thermoplastic silicone resin microparticles that contained the zirconium tetra(acetylacetonate) obtained in Reference Example 4 were not used. Directly after the preparation, the composition was tested with regard to the adhesive strength, percentage of the cohesion breakdown, and hardness of the obtained rubber-like cured body. And the composition was retained for 4 days at a temperature of 25°C after its preparation, and then cured under the same conditions as above. Hardness of the obtained rubber-like cured body was measured. The results of measurements are shown in Table 1.

### [Comparative Example 2]

A curable organopolysiloxane composition was prepared by the same method as in Practical Example 1, with the exception that 0.44 parts by weight of the zirconium acetylacetonate were used instead of the zirconium tetra(acetylacetonate) obtained in Reference Example 4. Directly after the preparation, the composition was tested with regard to the adhesive strength, percentage of the cohesion breakdown, and hardness of the obtained cured body. And the composition was retained for 4 days at a temperature of 25 °C after its preparation, and then cured under the same conditions as above. Hardness of the obtained rubber-like cured body was measured. The results of measurements are shown in Table 1.

### [Comparative Example 3]

A curable organopolysiloxane composition was prepared by the same method as in Practical Example 1, with the exception that 0.22 parts by weight of the zirconium acetylacetonate were used instead of the thermoplastic silicone resin microparticles that contained the zirconium tetra(acetylacetonate) obtained in Reference Example 4.
Directly after the preparation, the composition was tested with regard to the adhesive strength, percentage of the cohesion breakdown, and hardness of the obtained rubber-like cured body. And the composition was retained for 4 days at a temperature of 25 °C after its preparation, and then cured under the same conditions as above. Hardness of the obtained rubber-like cured body was measured. The results of measurements are shown in Table 1.

**[Table 1]**

| | | Pr. Ex. 1 | Pr. Ex. 2 | Comp. Ex. 1 | Comp. Ex. 2 | Comp. Ex. 3 |
|---|---|---|---|---|---|---|
| Adhesive strength [N/cm²] | | 59 | 52 | 19 | 23 | 46 |
| Cohesion breakdown [%] | | 100 | 100 | 10 | 100 | 60 |
| Type E Durometer Hardness | | | | | | |
| | Directly after preparation | 19 | 20 | 18 | 9 | 15 |
| | After 4 days at 25°C | 20 | 18 | 19 | 3 | 9 |

### [Industrial Applicability]

Since the curable organopolysiloxane composition of the present invention shows excellent adhesiveness to various substrates, it may find application as a sealant for casings of various electronic devices used in the automotive industry, as an adhesive agent for electrical and electronic devices, as a potting agent, protective coating agent, and as an underfill agent.

## Claims

1. A curable organopolysiloxane composition comprising:
(A) 100 parts by weight of an organopolysiloxane, which is expressed by the following average unit formula: RₐSiO_{(4-a)/2} (wherein, R is a substituted or unsubstituted univalent hydrocarbon group, and a is a number between 1.0 and 2.3) and has an average of at least 1.5 alkenyl groups per molecule;
(B) an organopolysiloxane that has an average of at least 1.5 silicon-bonded hydrogen atoms per molecule in a quantity that provides from 0.05 to 20 moles of silicon-bonded hydrogen atoms in the component per 1 mole of alkenyl groups in the component (A);
(C) a hydrosilylation-reaction catalyst in a quantity sufficient to cause a cross-linking process in the composition under the effect of a hydrosilylation reaction; and
(D) 0.001 to 50 parts by weight of microscopic particles of thermoplastic resin, said particles comprising a thermoplastic resin and at least one type of an organometallic compound selected from the group consisting of organotitanium compound, organozirconium compound, organoaluminum compound, and organotin compound, said organometallic compound being either admixed or encapsulated with said thermoplastic resin to form the microscopic particles.

2. The curable organopolysiloxane composition of Claim 1, wherein an average particle size of said component (D) is within the range of 0.01 to 500 µm.

3. The curable organopolysiloxane composition of Claim 1, wherein said organometallic compound in component (D) is a metal chelate compound.

4. The curable organopolysiloxane composition of Claim 1, wherein the content of said organometallic compound in component (D) is within the range of I to 99.9 wt.%.

5. The curable organopolysiloxane composition of Claim 1, wherein said thermoplastic resin in component (D) is a methylmethacrylate resin, polycarbonate resin, polystyrene resin, or a silicone resin.

6. The curable organopolysiloxane composition of Claim 1, wherein the softening point of said thermoplastic resin in component (D) is within the range of 40 to 200°C.

7. The curable organopolysiloxane composition of Claim 1, wherein said component (C) is microscopic particles of thermoplastic resin, said particles comprising a thermoplastic resin and a hydorosilylation-reaction catalyst, said hydorosilylation-reaction catalyst being either admixed or encapsulated with said thermoplastic resin.

8. The curable organopolysiloxane composition of Claim 7, wherein said thermoplastic resin in component (C) is a methylmethacrylate resin, polycarbonate resin, polystyrene resin, or a silicone resin.

9. The curable organopolysiloxane composition of Claim 7, wherein the softening point of said thermoplastic resin in component (C) is within the range of 40 to 200°C.

10. The curable organopolysiloxane composition of Claim 1, further comprising (E) a silicon compound that contains a silicon-bonded alkoxy group and /or epoxy group, but does not contain a silicon-bonded hydrogen atom, said silicon compound being used in an amount of 0.01 to 30 parts by weight per 100 parts by weight of component (A).

11. The curable organopolysiloxane composition of Claim 1, further comprising (F) a reaction inhibitor, said reaction inhibitor being used in an amount of 0.001 to 5 parts by weight per 100 parts by weight of component (A).

## Patentansprüche

1. Härtbare Organopolysiloxanzusammensetzung, enthaltend:
(A) 100 Gewichtsteile eines Organopolysiloxans, das durch die folgende mittlere Einheitsformel ausgedrückt wird: RₐSiO_{(4-a)/2} (worin R eine substituierte oder unsubstituierte einbindige Kohlenwasserstoffgruppe ist und a eine Zahl zwischen 1,0 und 2,3 ist) und durchschnittlich mindestens 1,5 Alkenylgruppen pro Molekül aufweist;
(B) ein Organopolysiloxan, das durchschnittlich mindestens 1 5 siliciumgebundene Wasserstoffatome pro Molekül aufweist, in einer Menge, die 0,05 bis 20 mol siliciumgebundene Wasserstoffatome in der Komponente pro 1 mol Alkenylgruppen in Komponente (A) zur Verfügung stellt;
(C) einen Hydrosilylierungsreaktionskatalysator in einer Menge, die ausreichend ist, um einen Vernetzungsprozess in der Zusammensetzung unter der Wirkung einer Hydrosiliylierungsreaktion zu herbeizuführen, und
(D) 0,001 bis 50 Gewichtsteile mikroskopischer Teilchen aus thermoplastischem Harz, wobei diese Teilchen ein thermoplastisches Harz und mindestens eine Art einer organometallischen Verbindung enthalten, die ausgewählt ist aus der Gruppe bestehend aus einer Organotitanverbindung, einer Organozirconiumverbindung, einer Organoaluminiumverbindung und einer Organozinnverbindung, wobei diese organometallische Verbindung entweder mit diesem thermoplastischen Harz vermischt oder verkapselt ist, um die mikroskopischen Teilchen zu bilden.

2. Härtbare Organopolysiloxanzusammensetzung nach Anspruch 1, wobei die mittlere Teilchengröße dieser Komponente (D) innerhalb des Bereichs von 0,01 bis 500 µm liegt.

3. Härtbare Organopolysiloxanzusammensetzung nach Anspruch 1, wobei diese organometallische Verbindung in Komponente (D) eine Metallchelatverbindung ist.

4. Härtbare Organopolysiloxanzusammensetzung nach Anspruch 1, wobei der Gehalt dieser organometallischen Verbindung in Komponente (D) innerhalb des Bereichs von 1 bis 99,9 Gew.-% liegt.

5. Härtbare Organopolysiloxanzusammensetzung nach Anspruch 1, wobei dieses thermoplastische Harz in Komponente (D) ein Mehylmethacrylatharz, Polycarbonatharz, Polystyrolharz oder Siliconharz ist.

6. Härtbare Organopolysiloxanzusammensetzung nach Anspruch 1, wobei der Erweichungspunkt dieses thermoplastischen Harzes in Komponente (D) innerhalb des Bereichs von 40 bis 200°C liegt.

7. Härtbare Organopolysiloxanzusammensetzung nach Anspruch 1, wobei diese Komponente (C) mikroskopische Teilchen aus thermoplastischem Harz sind und diese Teilchen ein thermoplastisches Harz und einen Hydrosilylierungsreaktionskatalysator enthalten, wobei dieser Hydrosilylierungsreaktionskatalysator entweder mit diesem thermoplastischen Harz vermischt oder verkapselt ist.

8. Härtbare Organopolysiloxanzusammensetzung nach Anspruch 7, wobei dieses thermoplastische Harz in Komponente (C) ein Methylmethacrylatharz, Polycarbonatharz, Polystyrolharz oder Siliconharz ist.

9. Härtbare Organopolysiloxanzusammensetzung nach Anspruch 7, wobei der Erweichungspunkt dieses thermoplastischen Harzes in Komponente (C) innerhalb des Bereichs von 40 bis 200°C liegt.

10. Härtbare Organopolysiloxanzusammensetzung nach Anspruch 1, die ferner (E) eine Siliciumverbindung enthält, die eine siliciumgebundene Alkoxygruppe und/oder Epoxygruppe, jedoch kein siliciumgebundenes Wasserstoffatom enthält, wobei diese Siliciumverbindung in einer Menge von 0,01 bis 30 Gewichtsteilen pro 100 Gewichtsteile Komponente (A) verwendet wird.

11. Härtbare Organopolysiloxanzusammensetzung nach Anspruch 1, die ferner (F) einen Reaktionsinhibitor enthält, wobei dieser Reaktionsinhibitor in einer Menge von 0,001 bis 5 Gewichtsteilen pro 100 Gewichtsteile Komponente (A) verwendet wird.

## Revendications

1. Composition d'organopolysiloxane durcissable comprenant :
(A) 100 parties en poids d'un organopolysiloxane, qui est exprimé par la formule unitaire moyenne suivante : RₐSiO_{(4-a)/2} (dans laquelle R est un groupe hydrocarbure monovalent substitué ou non substitué, et a est un nombre compris entre 1,0 et 2,3) et a une moyenne d'au moins 1,5 groupe alcényle par molécule ;
(B) un organopolysiloxane qui a une moyenne d'au moins 1,5 atome d'hydrogène à liaison silicium par molécule en une quantité qui fournit de 0,05 à 20 moles d'atomes d'hydrogène à liaison silicium dans le composant pour 1 mole de groupes alcényle dans le composant (A) ;
(C) un catalyseur de réaction d'hydrosilylation en une quantité suffisante pour provoquer un processus de réticulation dans la composition sous l'effet d'une réaction d'hydrosilylation ; et
(D) 0,001 à 50 parties en poids de particules microscopiques de résine thermoplastique, lesdites particules comprenant une résine thermoplastique et au moins un type d'un composé organométallique choisi dans le groupe consistant en un composé organotitane, un composé organozirconium, un composé organoaluminium et un composé organoétain, ledit composé organométallique étant mélangé ou bien encapsulé avec ladite résine thermoplastique pour former les particules microscopiques.

2. Composition d'organopolysiloxane durcissable selon la revendication 1, dans laquelle une taille moyenne de particule dudit composant (B) est dans la plage de 0,01 à 500 µm.

3. Composition d'organopolysiloxane durcissable selon la revendication 1, dans laquelle ledit composé organométallique dans le composant (D) est un composé chélate de métal.

4. Composition d'organopolysiloxane durcissable selon la revendication 1, dans laquelle la teneur en ledit composé organométallique dans le composant (D) est dans la plage de 1 à 99,9 % en poids.

5. Composition d'organopolysiloxane durcissable selon la revendication 1, dans laquelle ladite résine thermoplastique dans le composant (D) est une résine de méthacrylate de méthyle, une résine de poly(carbonate), une résine de poly(styrène) ou une résine de silicone.

6. Composition d'organopolysiloxane durcissable selon la revendication 1, dans laquelle le point de ramollissement de ladite résine thermoplastique dans le composant (D) est dans la plage de 40 à 200 °C.

7. Composition d'organopolysiloxane durcissable selon la revendication 1, dans laquelle ledit composant (C) correspond à des particules microscopiques de résine thermoplastique, lesdites particules comprenant une résine thermoplastique et un catalyseur de réaction d'hydrosilylation, ledit catalyseur de réaction d'hydrosilylation étant mélangé ou bien encapsulé avec ladite résine thermoplastique.

8. Composition d'organopolysiloxane durcissable selon la revendication 7, dans laquelle ladite résine thermoplastique dans le composant (C) est une résine de méthacrylate de méthyle, une résine de poly(carbonate), une résine de poly(styrène) ou une résine de silicone.

9. Composition d'organopolysiloxane durcissable selon la revendication 7, dans laquelle le point de ramollissement de ladite résine thermoplastique dans le composant (C) est dans la plage de 40 à 200 °C.

10. Composition d'organopolysiloxane durcissable selon la revendication 1, comprenant en outre (E) un composé silicium qui contient un groupe alcoxy et/ou groupe époxy à liaison silicium, mais ne contient pas d'atome d'hydrogène à liaison silicium, ledit composé silicium étant utilisé en une quantité de 0,01 à 30 parties en poids pour 100 parties en poids du composant (A).

11. Composition d'organopolysiloxane durcissable selon la revendication 1, comprenant en outre (F) un inhibiteur de réaction, ledit inhibiteur de réaction étant utilisé en une quantité de 0,001 à 5 parties en poids pour 100 parties en poids du composant (A).
